# FASCICULE DE BREVET EUROPEEN

(11) **EP 1 775 814 B1**
(45) Date de publication et mention de la délivrance du brevet: **23.11.2011**
(21) Numéro de dépôt: 06291483.3
(22) Date de dépôt: 20.09.2006
(51) Int. Cl.: H02G 3/12

(54) **Boîtier encastrable à vis de serrage guidée**
Einbaudose mit Spannschraubtriebführung
Flush-mounted box with drive clamping screw

(30) Priorité: 12.10.2005 FR 0510425
(43) Date de publication de la demande: 18.04.2007
(73) Titulaire: Legrand France, 87000 Limoges (FR); Legrand SNC, 87000 Limoges (FR)
(72) Inventeur: Guitard, Julien, 87000 Limoges (FR); Mendez, Pascal, 87170 Isle (FR); Vergne, Raphaël, 87100 Limoges (FR)
(74) Mandataire: Bentz, Jean-Paul

(56) Documents cités:
- DE-A1- 19 922 212
- DE-U- 7 524 603

## Description

L'invention concerne, de façon générale, le domaine des appareillages électriques.

Plus précisément, l'invention concerne un boîtier encastrable comprenant un corps creux et au moins un dispositif de fixation réversible, le corps creux comprenant au moins une paroi latérale et présentant un axe central, un bord proximal et un bord distal, le dispositif de fixation étant adapté à maintenir sélectivement le corps creux encastré dans un logement, une fois inséré dans ce logement par son bord distal et suivant une première direction pointant vers le fond de ce logement, et comprenant au moins un organe d'ancrage et une vis dotée d'une tête et d'un fût fileté, la tête étant accessible de l'extérieur du logement et bloquée en translation suivant la première direction par le corps creux, le fût fileté étant engagé dans l'organe d'ancrage et s'étendant suivant la première direction, l'organe d'ancrage présentant un côté interne, tourné vers une face externe de la paroi latérale du corps creux, et un côté externe, tourné vers une face interne du logement, cet organe d'ancrage étant sélectivement déplacé dans le logement par serrage de la vis jusqu'à buter sur la face interne du logement et interdire l'extraction du corps creux hors du logement, et une extrémité distale de la vis, opposée à la tête, étant guidée suivant une direction sensiblement radiale par rapport à l'axe central du corps creux.

Des boîtiers de ce type sont bien connus et largement utilisés depuis des années, un tel boîtier étant par exemple décrit dans le modèle d'utilité allemand DE 75 24 603.

Néanmoins, l'évolution permanente des méthodes de construction se traduit par une diversité croissante des structures de parois dans lesquelles sont creusés les logements d'encastrement de ces boîtiers et, en fin de compte, par une difficulté de plus en plus marquée à couvrir tous les besoins existants au moyen des boîtiers connus.

Dans ce contexte, l'invention a pour but de proposer un boîtier doté d'une capacité d'ancrage supérieure à celle des boîtiers connus.

A cette fin, le boîtier encastrable de l'invention, par ailleurs conforme à la définition générique qu'en donne le préambule ci-dessus, est essentiellement caractérisé en ce que la vis est également bloquée en translation par le corps creux suivant une deuxième direction inverse de la première direction, et que l'extrémité distale de la vis est engagée dans une lumière de forme allongée, qui lui sert de guide.

Il peut être avantageux de prévoir que le corps creux présente, à l'extérieur de sa paroi latérale et à proximité du bord distal, un voile s'étendant perpendiculairement à l'axe central et dans lequel est pratiquée la lumière, cette lumière s'étendant suivant une direction radiale par rapport à l'axe central.

La face externe de la paroi latérale peut utilement présenter une rampe sur laquelle l'organe d'ancrage s'appuie par son côté interne pour une première plage de serrage de la vis, cette rampe prenant naissance au bord distal du corps creux et s'étendant vers le bord proximal en s'éloignant de l'axe central, le serrage de la vis provoquant ainsi une progression de l'organe d'ancrage le long de la rampe et un éloignement progressif de cet organe par rapport à l'axe central.

De préférence, la face externe de la paroi latérale présente une glissière s'étendant entre la rampe et le bord proximal du corps creux, suivant une direction sensiblement parallèle à l'axe central du corps creux, et sur laquelle l'organe d'ancrage s'appuie par son côté interne pour une deuxième plage de serrage de la vis.

Dans un mode de réalisation avantageux de l'invention, il est possible de prévoir que le corps creux comporte, à proximité de son bord distal, une butée radiale distante de la rampe suivant une direction radiale par rapport à l'axe central, que l'organe d'ancrage présente, sur son côté interne, une surface en pente se rapprochant de l'axe central à proximité croissante du bord distal du corps creux, et que la surface en pente de l'organe d'ancrage et la butée radiale du corps creux coopèrent, à la fin d'un desserrage complet de la vis, pour rapprocher l'organe d'ancrage de l'axe central et le plaquer contre la rampe, à distance minimale de l'axe central.

Dans ce cas, la butée radiale peut avantageusement être portée par le voile.

Le côté externe de l'organe d'ancrage prend par exemple la forme d'une palette s'étendant suivant une direction sensiblement perpendiculaire à l'axe central.

L'organe d'ancrage peut, quant à lui, être constitué par un flan métallique découpé et plié.

L'organe d'ancrage peut alors facilement présenter une partie médiane sensiblement perpendiculaire au fût de la vis et traversée par ce fût, et deux oreilles latérales sensiblement perpendiculaires à la partie médiane et s'étendant en direction de l'axe central et du bord distal du corps creux.

Les oreilles latérales peuvent elles-mêmes présenter des parties arrondies disposées sur le côté interne de l'organe d'ancrage.

De préférence, le boîtier encastrable de l'invention comprend au moins deux dispositifs de fixation régulièrement répartis autour du corps creux.

Il est en outre judicieux de prévoir que la paroi latérale du corps creux présente, sur son bord proximal, un rebord périphérique propre à prendre appui sur le bord du logement, et que la palette de l'organe d'ancrage et le rebord du corps creux forment des mâchoires propres à enserrer, à la façon d'un étau, une couche d'un matériau dans lequel est pratiqué le logement.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'un boîtier encastrable conforme à l'invention, représenté dans une configuration dans laquelle l'organe d'ancrage est au bas de la rampe;
- la figure 2 est un détail agrandi du boîtier illustré à la figure 1 et représenté ici dans une configuration dans laquelle l'organe d'ancrage s'appuie sur la glissière;
- la figure 3 est une vue en coupe partielle agrandie du boîtier illustré à la figure 1;
- la figure 4 est une vue perspective partielle encore agrandie du boîtier illustré à la figure 1;
- la figure 5 est une vue en coupe partielle du boîtier illustré à la figure 2;
- la figure 6 est une vue en coupe partielle du boîtier illustré à la figure 1, représenté dans une configuration dans laquelle l'organe d'ancrage s'appuie sur la rampe;

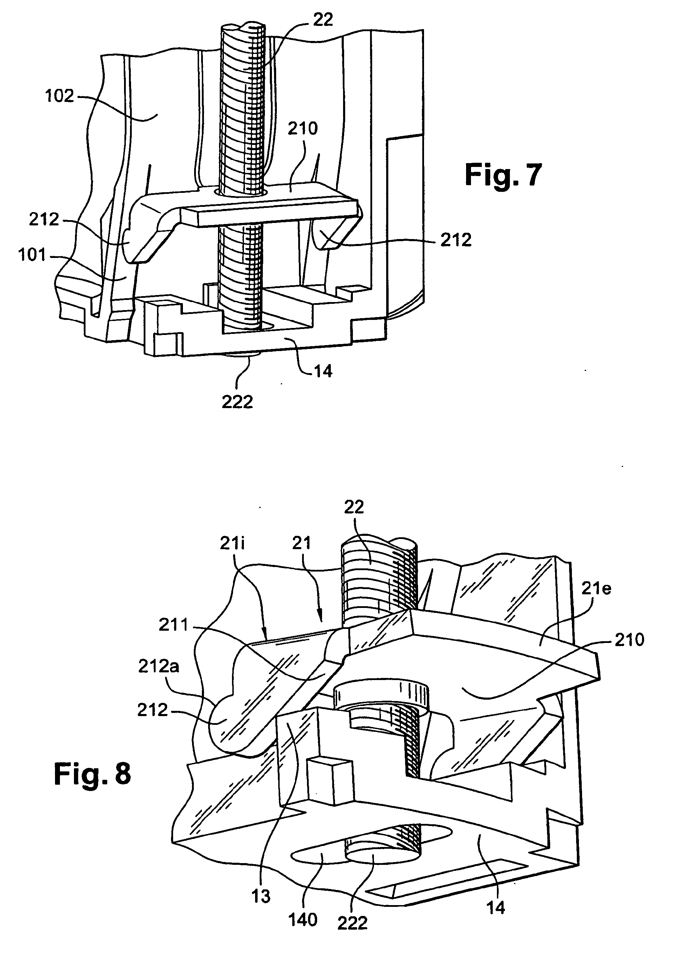

- les figures 7 et 8 sont des vues en perspective partielles du boîtier illustré à la figure 6, représenté dans deux positions respectives différentes de l'organe d'ancrage sur la rampe;
- la figure 9 est une autre vue perspective partielle du boîtier illustré à la figure 1; et
- la figure 10 est une vue en perspective partielle du boîtier illustré à la figure 1, représentant notamment la tête de la vis.

Comme annoncé précédemment, l'invention concerne un boîtier encastrable comprenant principalement un corps creux 1 et un ou plusieurs dispositifs 2 de fixation réversible permettant, une fois le corps creux 1 inséré dans un logement L, de le maintenir encastré dans ce logement par ancrage.

Par exemple, ce boîtier présente deux ou trois dispositifs de fixation 2 régulièrement répartis autour du corps creux 1.

Le corps creux 1 est essentiellement formé d'une paroi latérale 10 éventuellement fermée par un fond et présente un axe central X, un bord proximal 11, et un bord distal 12 par lequel ce corps 1 est inséré dans le logement L suivant une direction X1 pointant vers le fond de ce logement.

De préférence, la paroi latérale 10 du corps creux 1 présente également, sur son bord proximal 11, un rebord périphérique 110 propre à prendre appui sur le bord du logement L.

Chaque dispositif de fixation 2 comprend par exemple un organe d'ancrage 21 et une vis 22 dotée d'une tête 221 et d'un fût fileté 220.

La tête 221 de la vis 22 est accessible de l'extérieur du logement L et bloquée en translation suivant la direction X1 par le corps creux 1.

Le fût fileté 220 de la vis 22 est engagé dans l'organe d'ancrage 21 et s'étend suivant la direction X1.

Par ailleurs, l'organe d'ancrage 21 présente un côté interne 21i, qui est tourné vers la face externe 100 de la paroi latérale 10 du corps creux 1, et un côté externe 21e, qui est tourné vers la face interne Li du logement L.

Grâce à cet agencement, l'organe d'ancrage 21 peut être déplacé dans le logement L par serrage de la vis 22 jusqu'à buter sur la face interne Li du logement L, et interdire ainsi l'extraction du corps creux 1 hors du logement L.

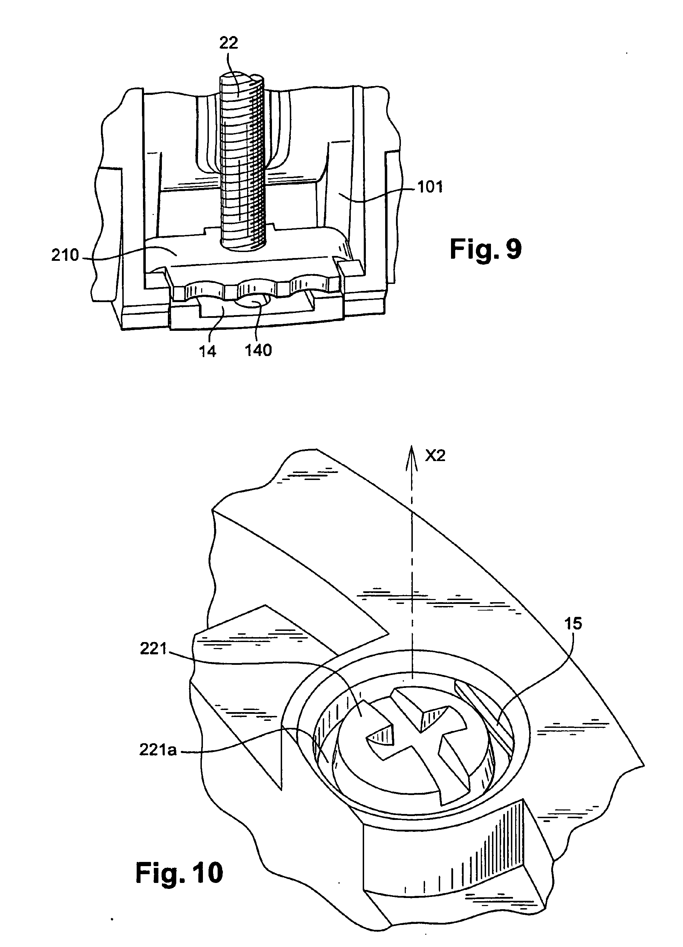

Selon l'invention, la vis 22 est également bloquée en translation par le corps creux 1 suivant la direction X2 inverse de la direction d'insertion X1, par exemple au moyen d'une collerette 221a (figure 10) de la tête de vis 221 rendue prisonnière de nervures 15 du corps creux 1.

D'autre part, l'extrémité distale 222 de cette vis, c'est-à-dire l'extrémité opposée à la tête 221, est guidée suivant une direction sensiblement radiale Y par rapport à l'axe central X du corps creux 1, cet agencement permettant d'éviter tout mouvement incontrôlé de la vis 22.

Pour assurer ce guidage, le corps creux 1 présente par exemple, à l'extérieur de sa paroi latérale 10 et à proximité de son bord distal 12, un voile 14 s'étendant perpendiculairement à l'axe central X et dans lequel est pratiquée une lumière 140.

Cette lumière 140 présente une forme allongée suivant la direction radiale Y, et sert de guide à l'extrémité distale 222 de la vis 22 qui est engagée dans cette lumière 140.

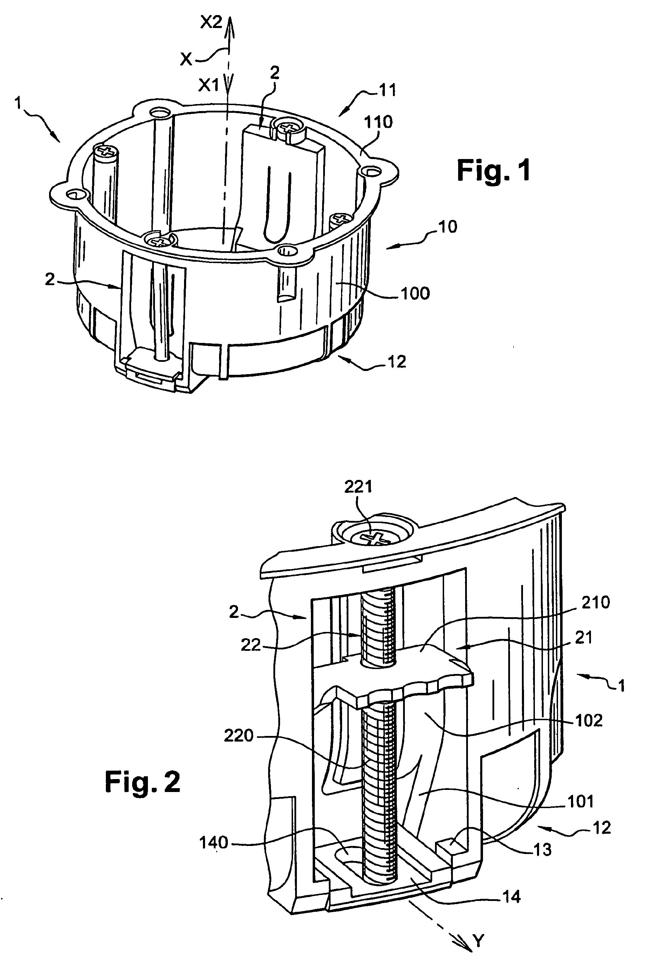

La face externe 100 de la paroi latérale 10 peut avantageusement présenter une rampe 101 sur laquelle l'organe d'ancrage 21 s'appuie par son côté interne 21i pour une première plage de serrage de la vis 22, l'organe d'ancrage étant initialement supposé adopter la position de repos notamment illustrée à la figure 1.

Comme le montre cette figure, la rampe 101 prend naissance au bord distal 12 du corps creux 1 et s'étend vers le bord proximal 11 en s'éloignant de l'axe central X.

Dans ces conditions, le serrage de la vis 22 provoque une progression de l'organe d'ancrage 21 le long de la rampe 101, depuis sa position de repos vers le bord proximal 11, et corrélativement un éloignement progressif de cet organe 21 par rapport à l'axe central X.

L'organe d'ancrage 21 est par exemple constitué par un flan métallique conformé, par découpe et pliage, de manière à présenter une partie médiane 210 et deux oreilles latérales 212.

La partie médiane 210 est traversée, suivant une direction sensiblement transversale, par le fût 220 de la vis 22.

Le côté externe 21e de l'organe d'ancrage 21 est défini sur cette partie médiane 210 et prend la forme d'une palette s'étendant suivant un plan sensiblement perpendiculaire à l'axe central X et au fût 220.

Les oreilles latérales 212, qui présentent des parties arrondies 212a disposées sur le côté interne 21i de l'organe d'ancrage 21, sont quant à elles sensiblement perpendiculaires à la partie médiane 210 et s'étendent approximativement en direction de l'axe central X et du bord distal 12 du corps creux 1.

La paroi latérale 10 présente, sur sa face externe 100, une glissière 102 contiguë à la rampe 101 et s'étendant entre cette rampe et le bord proximal 11 du corps creux 1, suivant une direction sensiblement parallèle à l'axe central X du corps creux 1.

Lorsque la vis 22 est serrée au-delà de la première plage de serrage, et atteint une deuxième plage de serrage contiguë de la première, les parties arrondies 212a des oreilles latérales 212 de l'organe d'ancrage 21 quittent la rampe 101 et s'appuient sur cette glissière 102.

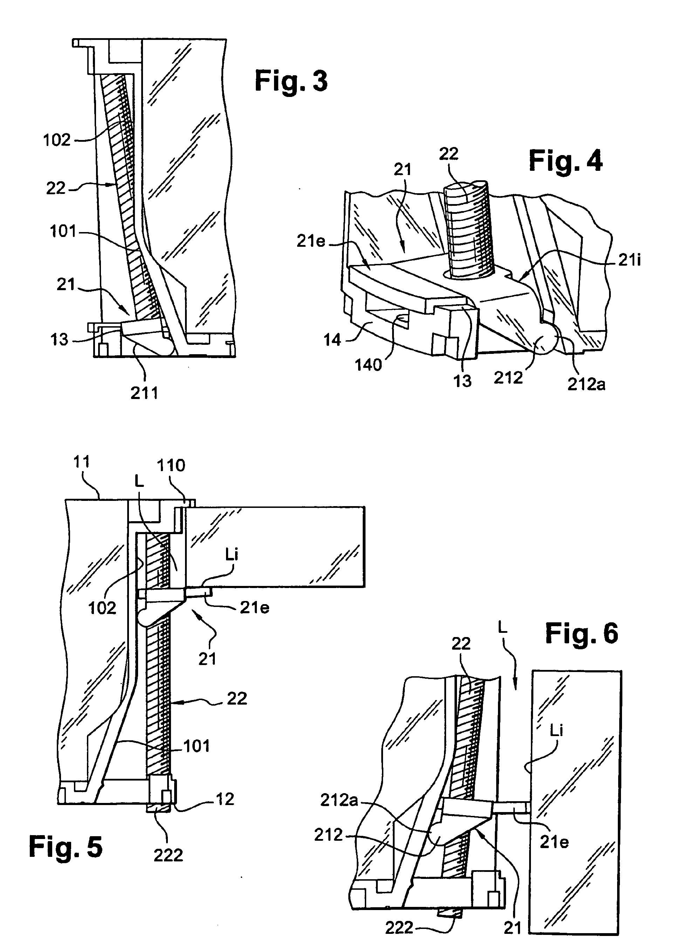

Dans le cas où le logement L est pratiqué dans une couche d'un matériau creux (figure 5), la palette 21e de l'organe d'ancrage 21 et le rebord 110 du corps creux 21, qui forment des mâchoires, enserrent alors la couche du matériau creux à la façon d'un étau à mesure que l'organe d'ancrage 21 progresse le long de la glissière 102.

Pour permettre le replacement de l'organe d'ancrage dans sa position de repos notamment illustrée aux figures 3 et 4, le corps creux 1 peut comporter, à proximité de son bord distal 12, une butée radiale 13 portée par le voile 14 et distante de la rampe 101 suivant la direction radiale Y.

Par ailleurs, l'organe d'ancrage 21 présente, sur son côté interne 21i, une surface en pente 211 qui se rapproche de l'axe central X à proximité croissante du bord distal 12 du corps creux 1.

Lorsque la vis 22, après avoir été serrée, est ramenée vers une position de desserrage complet, la surface en pente 211 de l'organe d'ancrage 21 et la butée radiale 13 du corps creux 1 viennent en contact l'une avec l'autre et coopèrent pour rapprocher l'organe d'ancrage 21 de l'axe central X et le plaquer contre la rampe 101, à distance minimale de l'axe central X.

Après avoir été encastré et ancré dans un logement L, un boîtier conforme à l'invention peut ainsi être facilement libéré, extrait du logement L, et éventuellement même être réutilisé.

## Revendications

1. Boîtier encastrable comprenant un corps creux (1) et au moins un dispositif (2) de fixation réversible, le corps creux (1) comprenant au moins une paroi latérale (10) et présentant un axe central (X), un bord proximal (11) et un bord distal (12), le dispositif de fixation (2) étant adapté à maintenir sélectivement le corps creux (1) encastré dans un logement (L), une fois inséré dans ce logement par son bord distal (12) et suivant une première direction (X1) pointant vers le fond de ce logement (L), et comprenant au moins un organe d'ancrage (21) et une vis (22) dotée d'une tête (221) et d'un fût fileté (220), la tête (221) étant accessible de l'extérieur du logement (L) et bloquée en translation suivant la première direction (X1) par le corps creux (1), le fût fileté (220) étant engagé dans l'organe d'ancrage (21) et s'étendant suivant la première direction (X1), l'organe d'ancrage (21) présentant un côté interne (21i), tourné vers une face externe (100) de la paroi latérale (10) du corps creux (1), et un côté externe (21e), tourné vers une face interne (Li) du logement (L), cet organe d'ancrage (21) étant sélectivement déplacé dans le logement (L) par serrage de la vis (22) jusqu'à buter sur la face interne (Li) du logement (L) et interdire l'extraction du corps creux (1) hors du logement (L), et une extrémité distale (222) de la vis (22), opposée à la tête (221), étant guidée suivant une direction sensiblement radiale (Y) par rapport à l'axe central (X) du corps creux (1), **caractérisé en ce que** la vis (22) est également bloquée en translation par le corps creux (1) suivant une deuxième direction (X2) inverse de la première direction (X1), et **en ce que** l'extrémité distale (222) de la vis (22) est engagée dans une lumière (140) de forme allongée, qui lui sert de guide.

2. Boîtier encastrable suivant la revendication 1, **caractérisé en ce que** le corps creux (1) présente, à l'extérieur de sa paroi latérale (10) et à proximité du bord distal (12), un voile (14) s'étendant perpendiculairement à l'axe central (X) et dans lequel est pratiquée la lumière (140), cette lumière (140) s'étendant suivant une direction radiale (Y) par rapport à l'axe central (X).

3. Boîtier encastrable suivant l'une quelconque des revendications précédentes, **caractérisé en ce que** la face externe (100) de la paroi latérale (10) présente une rampe (101) sur laquelle l'organe d'ancrage (21) s'appuie par son côté interne (21i) pour une première plage de serrage de la vis (22), cette rampe (101) prenant naissance au bord distal (12) du corps creux (1) et s'étendant vers le bord proximal (11) en s'éloignant de l'axe central (X), le serrage de la vis (22) provoquant ainsi une progression de l'organe d'ancrage (21) le long de la rampe (101) et un éloignement progressif de cet organe (21) par rapport à l'axe central (X).

4. Boîtier encastrable suivant la revendication 3, **caractérisé en ce que** la face externe (100) de la paroi latérale (10) présente une glissière (102) s'étendant entre la rampe (101) et le bord proximal (11) du corps creux (1), suivant une direction sensiblement parallèle à l'axe central (X) du corps creux (1), et sur laquelle l'organe d'ancrage (21) s'appuie par son côté interne (21i) pour une deuxième plage de serrage de la vis (22).

5. Boîtier encastrable suivant l'une quelconque des revendications précédentes combinée à la revendication 3, **caractérisé en ce que** le corps creux (1) comporte, à proximité de son bord distal (12), une butée radiale (13) distante de la rampe (101) suivant une direction radiale (Y) par rapport à l'axe central (X), **en ce que** l'organe d'ancrage (21) présente, sur son côté interne (21i), une surface en pente (211) se rapprochant de l'axe central (X) à proximité croissante du bord distal (12) du corps creux (1), et **en ce que** la surface en pente (211) de l'organe d'ancrage (21) et la butée radiale (13) du corps creux (1) coopèrent, à la fin d'un desserrage complet de la vis (22), pour rapprocher l'organe d'ancrage (21) de l'axe central (X) et le plaquer contre la rampe (101), à distance minimale de l'axe central (X).

6. Boîtier encastrable suivant les revendications 2 et 5, **caractérisé en ce que** la butée radiale (13) est portée par le voile (14).

7. Boîtier encastrable suivant l'une quelconque des revendications précédentes, **caractérisé en ce que** le côté externe (21e) de l'organe d'ancrage (21) prend la forme d'une palette s'étendant suivant une direction sensiblement perpendiculaire à l'axe central (X).

8. Boîtier encastrable suivant l'une quelconque des revendications précédentes, **caractérisé en ce que** l'organe d'ancrage (21) est constitué par un flan métallique découpé et plié.

9. Boîtier encastrable suivant la revendication 8, **caractérisé en ce que** l'organe d'ancrage (21) présente une partie médiane (210) sensiblement perpendiculaire au fût (220) de la vis (22) et traversée par ce fût (220), et deux oreilles latérales (212) sensiblement perpendiculaires à la partie médiane (210) et s'étendant en direction de l'axe central (X) et du bord distal (12) du corps creux (1).

10. Boîtier encastrable suivant la revendication 9, **caractérisé en ce que** les oreilles latérales (212) présentent des parties arrondies (212a) disposées sur le côté interne (21i) de l'organe d'ancrage (21).

11. Boîtier encastrable suivant l'une quelconque des revendications précédentes, **caractérisé en ce qu'**il comprend au moins deux dispositifs de fixation (2) régulièrement répartis autour du corps creux (1).

12. Boîtier encastrable suivant l'une quelconque des revendications précédentes combinée à la revendication 7, **caractérisé en ce que** la paroi latérale (10) du corps creux (1) présente, sur son bord proximal (11), un rebord périphérique (110) propre à prendre appui sur le bord du logement (L), et **en ce que** la palette (21e) de l'organe d'ancrage (21) et le rebord (110) du corps creux (21) forment des mâchoires propres à enserrer, à la façon d'un étau, une couche d'un matériau dans lequel est pratiqué le logement (L).

## Claims

1. Flush-mountable casing comprising a hollow body (1) and at least one reversible fixing device (2), the hollow body (1) comprising at least one lateral wall (10) and having a central axis (X), a proximal edge (11) and a distal edge (12), the fixing device (2) being adapted selectively to retain the hollow body (1) flush-mounted in a housing (L), once its distal edge (12) has been inserted into this housing in a first direction (X1) pointing towards the back of this housing (L), and comprising at least one anchoring member (21) and one screw (22) having a head (221) and a threaded shank (220), the head (221) being accessible from outside the housing (L) and immobilized in translation in the first direction (X1) by the hollow body (1), the threaded shank (220) being engaged in the anchoring member (21) and extending in the first direction (X1), the anchoring member (21) having an interior side (21i) facing towards an exterior face (100) of the lateral wall (10) of the hollow body (1) and an exterior side (21e) facing towards an interior face (Li) of the housing (L), this anchoring member (21) being selectively moved in the housing (L) by tightening the screw (22) until it abuts on the interior face (Li) of the housing (L) and prevents extraction of the hollow body (1) from the housing (L), and a distal end (222) of the screw (22), at the end opposite the head (221), being guided in a substantially radial direction (Y) relative to the central axis (X) of the hollow body (1), **characterized in that** the screw (22) is also immobilized in translation by the hollow body (1) in a second direction (X2) opposite the first direction (X1), and **in that** the distal end (222) of the screw (22) is engaged in an opening (140) of elongate shape which serves it as a guide.

2. Flush-mountable casing according to claim 1, **characterized in that** the hollow body (1) has, on the outside of its lateral wall (10) and near the distal edge (12), a web (14) extending perpendicularly to the central axis (X) and in which the opening (140) is formed, this opening (140) extending in a radial direction (Y) relative to the central axis (X).

3. Flush-mountable casing according to either of the preceding claims, **characterized in that** the exterior face (100) of the lateral wall (10) includes a ramp (101) on which the interior side (21i) of the anchoring member (21) bears over a first range of tightening of the screw (22), this ramp (101) starting at the distal edge (12) of the hollow body (1) and extending towards the proximal edge (11) and away from the central axis (X), tightening the screw (22) thus moving the anchoring member (21) along the ramp (101) and progressively moving this member (21) away from the central axis (X).

4. Flush-mountable casing according to claim 3, **characterized in that** the exterior face (100) of the lateral wall (10) includes a slideway (102) extending between the ramp (101) and the proximal edge (11) of the hollow body (1) in a direction substantially parallel to the central axis (X) of the hollow body (1) and on which the interior side (21i) of the anchoring member (21) bears over a second range of tightening of the screw (22).

5. Flush-mountable casing according to any one of the preceding claims in combination with claim 3, **characterized in that** the hollow body (1) includes, near its distal edge (12), a radial abutment (13) at a distance from the ramp (101) in a radial direction (Y) relative to the central axis (X), **in that** the anchoring member (21) has, on its interior side (21i), a sloping surface (211) approaching the central axis (X) increasingly near the distal edge (12) of the hollow body (1), and **in that** the sloping surface (211) of the anchoring member (21) and the radial abutment (13) of the hollow body (1) co-operate, at the end of complete loosening of the screw (22), to move the anchoring member (21) nearer to the central axis (X) and to press it against the ramp (101) at a minimum distance from the central axis (X).

6. Flush-mountable casing according to claims 2 and 5, **characterized in that** the radial abutment (13) is carried by the web (14).

7. Flush-mountable casing according to any one of the preceding claims, **characterized in that** the exterior side (21e) of the anchoring member (21) takes the form of a flap extending in a direction substantially perpendicular to the central axis (X).

8. Flush-mountable casing according to any one of the preceding claims, **characterized in that** the anchoring member (21) consists of a metal blank cut and bent to shape.

9. Flush-mountable casing according to claim 8, **characterized in that** the anchoring member (21) has a median part (210) substantially perpendicular to the shank (220) of the screw (22) through which this shank (220) passes and two lateral lugs (212) substantially perpendicular to the median part (210) and extending in the direction of the central axis (X) and the distal edge (12) of the hollow body (1).

10. Flush-mountable casing according to claim 9, **characterized in that** the lateral lugs (212) have rounded portions (212a) on the interior side (21i) of the anchoring member (21).

11. Flush-mountable casing according to any one of the preceding claims, **characterized in that** it comprises at least two fixing devices (2) regularly distributed around the hollow body (1).

12. Flush-mountable casing according to any one of the preceding claims in combination with claim 7, **characterized in that** the lateral wall (10) of the hollow body (1) has, on its proximal edge (11), a peripheral rim (110) adapted to bear on the edge of the housing (L) and **in that** the flap (21e) of the anchoring member (21) and the rim (110) of the hollow body (21) form jaws adapted to grip, like a vice, a layer of a material in which the housing (L) is formed.

## Patentansprüche

1. Einbaugehäuse mit einem Hohlkörper (1) und wenigstens einer Einrichtung (2) zur reversiblen Befestigung, wobei der Hohlkörper (1) wenigstens eine Seitenwand (10) umfasst und eine Mittelachse (X), einen proximalen Rand (11) und einen distalen Rand (12) aufweist, wobei die Befestigungseinrichtung (2) so ausgebildet ist, dass diese den in einer Aufnahme (L) eingebauten Hohlkörper (1) selektiv hält, sobald dieser mit seinem distalen Rand (12) in diese Aufnahme eingeführt ist und einer ersten Richtung (X1) folgt, die in Richtung des Bodens dieser Aufnahme (L) zeigt, und wenigstens ein Verankerungselement (21) und eine mit einem Kopf (221) und einem Gewindeschaft (220) versehene Schraube (22) umfasst, wobei der Kopf (221) von außerhalb der Aufnahme (L) zugänglich und an einer Verschiebung in der ersten Richtung (X1) durch den Hohlkörper (1) blockiert ist, wobei der Gewindeschaft (220) in das Verankerungselement (21) eingreift und sich in der ersten Richtung (X1) erstreckt, wobei das Verankerungselement (21) eine Innenkante (21i) aufweist, die eine Außenfläche (100) der Seitenwand (10) des Hohlkörpers (1) zugewandt ist, und eine Außenkante (21e), die einer Innenfläche (Li) der Aufnahme (L) zugewandt ist, wobei dieses Verankerungselement (21) in der Aufnahme (L) durch ein Anziehen der Schraube (22) wahlfrei verschoben wird, bis dieses an der Innenfläche (Li) der Aufnahme (L) anstößt und das Herausziehen des Hohlkörpers (1) aus der Aufnahme (L) unterbindet, und ein distales Endes (222) der Schraube (22), entgegengesetzt zum Kopf (221), in einer im Wesentlichen radialen Richtung (Y) in Bezug zur Mittelachse (X) des Hohlkörpers (1) geführt ist, **dadurch gekennzeichnet, dass** die Schraube (22) durch den Hohlkörper (1) auch in einer zweiten Richtung (X2), die der ersten Richtung (X1) entgegengerichtet ist, translatorisch blockiert ist, und dass das distale Ende (222) der Schraube (22) in ein Langloch (140) eingreift, das diesem als Führung dient.

2. Einbaugehäuse nach Anspruch 1, **dadurch gekennzeichnet, dass** der Hohlkörper (1) an der Außenseite der Seitenwand (10) und in der Nähe des distalen Randes (12) eine sich senkrecht zur Mittelachse (X) erstreckende Abdeckung (24) aufweist, in welcher das Langloch (140) ausgebildet ist, wobei sich dieses Langloch (140) in einer radialen Richtung (X) in Bezug zur Mittelachse (X) erstreckt.

3. Einbaugehäuse nach einem der vorhergehenden Ansprüche, **dadurch gekennzeichnet, dass** die Außenfläche (100) der Seitenwand (10) eine Schräge (101) aufweist, auf welcher das Verankerungselement (21) bei einer ersten Verriegelungsstufe der Schraube (22) mit seiner Innenkante (21i) anstößt, wobei diese Schräge (101) an dem distalen Rand (12) des Hohlkörpers (1) beginnt und sich in Richtung des proximalen Randes (11) unter Entfernung von der Mittelachse (X) erstreckt, wobei das Anziehen der Schraube (22) dann ein Fortschreiten des Verriegelungselements (21) entlang der Schräge (101) und eine progressive Entfernung dieses Elements (21) in Bezug zur Mittelachse (X) herbeiführt.

4. Einbaugehäuse nach Anspruch 3, **dadurch gekennzeichnet, dass** die Außenfläche (100) der Seitenwand (10) eine Gleitschiene (102) aufweist, die sich zwischen der Schräge (101) und dem proximalen Rand (11) des Hohlkörpers (1), einer im Wesentlichen zur Mittelachse (X) des Hohlkörpers (1) parallelen Richtung folgend, erstreckt und auf welcher das Verriegelungselement (21) bei einer zweiten Verriegelungsstufe der Schraube (22) mit seiner Innenkante (21i) anstößt.

5. Einbaugehäuse nach einem der vorhergehenden Ansprüche, kombiniert mit Anspruch 3, **dadurch gekennzeichnet, dass** der Hohlkörper (1) in der Nähe seines distalen Randes (12) einen radialen Anschlag (13), in Abstand zur Schräge (101) aufweist, der einer im Bezug zur Mittelachse (X) radialen Richtung (Y) folgt, dass das Verriegelungselement (21) auf seiner Innenkante (21i) eine abfallende Fläche (211) aufweist, die sich auf eine zunehmende Nähe am distalen Rand (12) des Hohlkörpers (1) an die Mittelachse (X) annähert, und dass die abfallende Oberfläche (211) des Verriegelungselements (21) und der radiale Anschlag (13) des Hohlkörpers (1) zusammenwirken, am Ende mit einer Vollständigen Lockerung der Schraube (22), um das Verankerungselement (21) an die Mittelachse (X) anzunähern und dieses in einem minimalen Abstand von der Mittelachse (X) gegen die Schräge (101) zu drücken.

6. Einbaugehäuse nach den Ansprüchen 2 und 5, **dadurch gekennzeichnet, dass** der radiale Anschlag (13) von der Abdeckung (14) getragen wird.

7. Einbaugehäuse nach einem der vorhergehenden Ansprüche, **dadurch gekennzeichnet, dass** die Außenkante (21e) des Verankerungselements (21) die Form einer sich in Richtung im Wesentlichen senkrecht zur Mittelachse (X) erstreckenden Palette annimmt.

8. Einbaugehäuse nach einem der vorhergehenden Ansprüche, **dadurch gekennzeichnet, dass** das Verankerungselement (21) durch eine zugeschnittene und gebogene Metallscheibe gebildet wird.

9. Einbaugehäuse nach Anspruch 8, **dadurch gekennzeichnet, dass** das Verankerungselement (21) einen Mittelbereich (210) im Wesentlichen senkrecht zum Schaft (220) der Schraube (22) und quer durch diesen Schaft (220) sowie zwei seitliche Ohren (212) im Wesentlichen in einer Richtung von der Mittelachse (X) und dem distalen Rand (12) des Hohlkörpers (1) aufweist.

10. Einbaugehäuse nach Anspruch 9, **dadurch gekennzeichnet, dass** die seitlichen Ohren (212) gerundete Bereiche (212a) aufweisen, die auf der Innenkante (21i) des Verankerungselements (21) angeordnet sind.

11. Einbaugehäuse nach einem der vorhergehenden Ansprüche, **dadurch gekennzeichnet, dass** dieses wenigstens zwei Befestigungseinrichtungen (2) aufweist, die gleichmäßig verteilt um den Hohlkörper (1) herum angeordnet sind.

12. Einbaugehäuse nach einem der vorhergehenden Ansprüche, kombiniert mit Anspruch 7, **dadurch gekennzeichnet, dass** die Seitenwand (10) des Hohlkörpers (1) an seinem proximalen Rand (11) eine geeignete Umfangskante (110) aufweist, um an den Rand der Aufnahme (L) anzustoßen, und dass die Palette (21e) des Verankerungselements (21) und der Rand (110) des Hohlkörpers (21) geeignete Klemmbacken bilden, um eine Schicht eines Materials, aus welchem die Aufnahme (L) hergestellt ist, einzuspannen wie ein Schraubstock.
